# EUROPÄISCHE PATENTSCHRIFT

(11) **EP 3 088 095 B1**
(45) Veröffentlichungstag und Bekanntmachung des Hinweises auf die Patenterteilung: **17.07.2019**
(21) Anmeldenummer: 15165663.4
(22) Anmeldetag: 29.04.2015
(51) Int. Cl.: B21D 28/10

(54) **VERFAHREN ZUM BEARBEITEN VON PLATTENARTIGEN WERKSTÜCKEN**
METHOD FOR PROCESSING PANEL-SHAPED WORKPIECES
PROCÉDÉ DE TRAITEMENT DE PIÈCES DE TYPE PLAQUES

(43) Veröffentlichungstag der Anmeldung: 02.11.2016
(73) Patentinhaber: TRUMPF Werkzeugmaschinen GmbH + Co. KG, 71254 Ditzingen (DE)
(72) Erfinder: Wilhelm, Markus, 70839 Gerlingen (DE); Abiko, Takeshi, 71254 Ditzingen (DE)
(74) Vertreter: Kohler Schmid Möbus Patentanwälte

(56) Entgegenhaltungen:
- EP-A2- 0 962 269
- WO-A1-2015/001217
- FR-A1- 2 979 265

## Beschreibung

Die Erfindung betrifft ein Verfahren zum trennenden Bearbeiten von plattenartigen Werkstücken aus einem elastisch verformbaren Werkstoff, insbesondere zum trennenden Bearbeiten von Blechen, wobei zwei Werkstückteile voneinander getrennt werden,
- indem die beiden Werkstückteile zunächst unter Stehenlassen wenigstens eines die beiden Werkstückteile miteinander verbindenden Verbindungsstegs unvollständig voneinander getrennt werden und
- indem die beiden Werkstückteile anschließend durch Lösen der durch den Verbindungssteg hergestellten Verbindung vollständig voneinander getrennt werden,
wobei der wenigstens eine Verbindungssteg als Festkörpergelenk mit einer Form erstellt wird, aufgrund derer der Verbindungssteg die beiden Werkstückteile derart miteinander verbindet, dass die beiden Werkstückteile unter elastischer Verformung des Verbindungsstegs gegen die Wirkung einer Rückstellkraft relativ zueinander bewegbar sind.

Die Erfindung betrifft des Weiteren ein Verfahren zum Bearbeiten von plattenartigen Werkstücken aus einem elastisch verformbaren Werkstoff, insbesondere zum Bearbeiten von Blechen, wobei ein Trennverfahren der vorstehenden Art durchgeführt wird und wobei nach dem unvollständigen und vor dem vollständigen Trennen der beiden Werkstückteile wenigstens einer der Werkstückteile zusätzlich bearbeitet wird.

Gattungsgemäßer Stand der Technik ist offenbart in WO 2015/001217 A1. Diese Druckschrift offenbart ein Verfahren, im Rahmen dessen zwischen zwei benachbarten Werkstückteilen eine Verbindungslasche stehengelassen wird, die eine Bogenform aufweist und die eine mit nachfolgenden Bearbeitungsschritten verbundene Vergrößerung des zwischen den Werkstückteilen bestehenden Abstandes unter Aufrechterhaltung einer Verbindung zwischen den Werkstückteilen kompensieren soll.

Weiterer Stand der Technik ist aus praktischer Anwendung bekannt.

Gebräuchlich ist ein Verfahren zur Blechbearbeitung, im Rahmen dessen zunächst aus einem Rohblech durch schneidende Bearbeitung Blechteile, ein die Blechteile umgebendes Restgitter sowie Verbindungsstege zwischen den Blechteilen und dem Restgitter, sogenannte "Micro-Joints", erzeugt werden. Die Micro-Joints stellen eine vorläufige Verbindung zwischen den Blechteilen und dem Restgitter her und sorgen auf diese Art und Weise dafür, dass nach der schneidenden Bearbeitung des Rohblechs die Blechteile und das Restgitter als Einheit gehandhabt werden können. Im Falle des vorbekannten Verfahrens schließt sich an die schneidende Bearbeitung des Rohblechs als zusätzliche Bearbeitung eine Umformung der bei der Rohblechbearbeitung erzeugten Blechteile an. Aufgrund der Umformung verkleinert sich die Fläche, über die sich die Blechteile in der Ebene des bearbeiteten Rohblechs erstrecken und die Micro-Joints, mittels derer die Blechteile mit dem Restgitter verbunden sind, werden gelängt und dabei plastisch verformt. Der Abstand der umgeformten Blechteile von dem sie umgebenden Restgitter ist dauerhaft größer als der Abstand der unverformten Blechteile von dem Restgitter.

Ausgehend von dem gattungsgemäßen Stand der Technik ist es die Aufgabe der vorliegenden Erfindung, die gattungsgemäßen Verfahren dahingehend weiterzubilden, dass sich zwischen einander benachbarten Werkstückteilen Verbindungsstege mit verbessertem Elastizitätsverhalten ergeben.

Erfindungsgemäß gelöst wird diese Aufgabe durch das Trennverfahren gemäß Patentanspruch 1 und durch das Bearbeitungsverfahren gemäß Patentanspruch 10.

Anspruchsgemäß wird der wenigstens eine Verbindungssteg, über welchen die unvollständig voneinander getrennten Werkstückteile miteinander verbunden sind, als Festkörpergelenk erstellt, welches die beiden Werkstückteile derart miteinander verbindet, dass die beiden Werkstückteile unter elastischer Verformung des Verbindungsstegs gegen die Wirkung einer Rückstellkraft relativ zueinander bewegbar sind. Als Festkörpergelenk wird ein Verbindungssteg erstellt, der aufgrund seiner Form die gewünschte Elastizität besitzt.

Das Festkörpergelenk wird als solches von Material des trennend bearbeiteten Werkstücks gebildet. Bewegen sich die Werkstückteile etwa aufgrund einer sich an die trennende Bearbeitung anschließenden zusätzlichen Bearbeitung ausgehend von einer Ausgangsposition relativ zueinander, so bewirkt das Festkörpergelenk eine selbsttätige Rückstellung des oder der Werkstückteile in die Ausgangsposition. Die Gelenkfunktion eines derartigen, als Festkörpergelenk ausgebildeten Verbindungsstegs resultiert aus dem Umstand, dass die Biegesteifigkeit des Verbindungsstegs gegenüber der Biegesteifigkeit der angrenzenden Werkstückteile vermindert ist.

Erfindungsgemäß wird als Festkörpergelenk ein Verbindungssteg mit einer Mäanderform erstellt, die eine V-Form und einen sich an die V-Form anschließenden weiteren Schenkel umfasst. Der weitere Schenkel bildet mit dem ihm benachbarten Schenkel der V-Form eine weitere V-Form des Verbindungsstegs. Durch die Mäanderform wird ein günstiges Elastizitätsverhalten des Verbindungsstegs erzielt. Insbesondere kann ein Verbindungssteg mit einer Mäanderform eine weichere Feder ausbilden und/oder seine Länge stärker elastisch ändern als ein Verbindungssteg mit einer einfachen V-Form. Die V-Form des erfindungsgemäßen Verbindungsstegs wird mit zwei Schenkeln erstellt, die durch einen Übergangsbereich miteinander verbunden sind, zu dem Übergangsbereich hin konvergieren und einen spitzen Innenwinkel einschließen. Jeder der Schenkel wird an dem von dem Übergangsbereich abliegenden Schenkelende mittelbar oder unmittelbar an einen der unvollständig voneinander getrennten Werkstückteile angebunden.

Wird im Rahmen des erfindungsgemäßen Bearbeitungsverfahrens nach dem unvollständigen Trennen zweier Werkstückteile einer der Werkstückteile zusätzlich bearbeitet und ändert dieser Werkstückteil unter der Wirkung der zusätzlichen Bearbeitung seine Ausgangsposition gegenüber dem anderen Werkstückteil, so kehrt der zusätzlich bearbeitete Werkstückteil nach Beendigung der zusätzlichen Bearbeitung aufgrund der Elastizität des oder der Verbindungsstege selbsttätig in seine Ausgangsposition zurück. Dieser Umstand ist insbesondere für Anwendungsfälle von Bedeutung, in denen nach dem unvollständigen Trennen zweier Werkstückteile wenigstens einer der Werkstückteile mehreren zeitlich aufeinanderfolgenden zusätzlichen Bearbeitungen unterzogen wird und mehrere der zusätzlichen Bearbeitungen unter Berücksichtigung der von dem zu bearbeitenden Werkstückteil nach dem unvollständigen Trennen gegenüber dem anderen Werkstückteil eingenommenen Position gesteuert werden. Falls der zu bearbeitende Werkstückteil bei einer zusätzlichen Bearbeitung die gegenüber dem anderen Werkstückteil ursprünglich eingenommene Position verlässt, so sorgen der oder die als Festkörpergelenk ausgeführten Verbindungsstege dafür, dass der Werkstückteil nach der zusätzlichen Bearbeitung wieder seine Ausgangsposition gegenüber dem anderen Werkstückteil einnimmt und somit auch die nächste zusätzliche Bearbeitung unter Berücksichtigung der Ausgangsposition des zu bearbeitenden Werkstückteils gesteuert werden kann.

Zur unvollständigen Trennung der beiden Werkstückteile kann das betreffende Werkstück auf unterschiedliche Art und Weise bearbeitet werden. Bevorzugt wird erfindungsgemäß eine Werkstückbearbeitung durch Lasertrennen. Alternativ können der oder die Verbindungsstege und/oder die Trennfuge zwischen den beiden unvollständig voneinander getrennten Werkstückteilen aber beispielsweise auch durch Stanzen, Wasserstrahlschneiden oder Drahterodieren oder durch Kombinieren der genannten Verfahren erstellt werden.

Denkbar sind als Festkörpergelenke ausgeführte Verbindungsstege beispielsweise zwischen einem einzelnen im Rahmen einer trennenden Blechbearbeitung erstellten Fertigteil und einem Restgitter der Blechbearbeitung aber auch zwischen mehreren Fertigteilen einerseits und einem Restgitter andererseits und/oder zur Verbindung mehrerer Fertigteile untereinander.

Eine Relativbeweglichkeit der unvollständig voneinander getrennten Werkstückteile unter elastischer Verformung des oder der als Festkörpergelenke ausgeführten Verbindungsstege wird durch das erfindungsgemäße Verfahren insbesondere in einer Bewegungsebene erzeugt, die parallel zu einer Plattenebene des plattenartigen Werkstücks verläuft. Alternativ oder ergänzend kann das erfindungsgemäße Trennverfahren aber auch derart durchgeführt werden, dass sich eine Elastizität des oder der Verbindungsstege und eine daraus resultierende Relativbeweglichkeit der unvollständig voneinander getrennten Werkstückteile gegen die Wirkung einer Rückstellkraft senkrecht zu der Plattenebene des plattenartigen Werkstücks ergibt. Bevorzugtermaßen wird gegebenenfalls dafür gesorgt, dass der Grad der Elastizität des oder der Verbindungsstege parallel zu der Plattenebene die Elastizität des oder der Verbindungsstege senkrecht zu der Plattenebene wesentlich übersteigt.

Besondere Ausführungsarten des Trennverfahrens gemäß Patentanspruch 1 und des Bearbeitungsverfahrens gemäß Patentanspruch 10 ergeben sich aus den abhängigen Patentansprüchen 2 bis 9 und 11.

Als sich an die unvollständige Trennung zweier Werkstückteile anschließende zusätzliche Bearbeitung kommen erfindungsgemäß verschiedenartige Bearbeitungen in Frage, wobei eine Umformung eines von einem anderen Werkstückteil unvollständig getrennten Werkstückteils besonders praxisrelevant ist. Gemäß Patentanspruch 11 wird das erfindungsgemäße Trennverfahren insbesondere in Fällen angewandt, in denen nach dem unvollständigen und vor dem vollständigen Trennen von Werkstückteilen wenigstens einer der Werkstückteile an einer Werkstückkante zusätzlich bearbeitet wird. Für derartige Anwendungsfälle ist die Federelastizität des oder der Verbindungsstege zwischen den unvollständig voneinander getrennten Werkstückteilen insofern von besonderer Bedeutung, als vor allem mit einer Kantenbearbeitung eine gegenseitige Auslenkung der beiden unvollständig voneinander getrennten Werkstückteile verbunden sein kann. Als Beispiel für eine Kantenbearbeitung ist das Rollkneifen zum Erzeugen einer Fase an der Kante wenigstens eines der beiden Werkstückteile zu nennen. Beim Rollkneifen wird der betreffende Werkstückteil an seiner Kante durch eine Umformrolle beaufschlagt, die mit einer konischen Mantelfläche auf der umzuformenden Kante des Werkstückteils abrollt und dadurch an der Kante des Werkstückteils eine schräge Fläche erzeugt. Zu Beginn der Bearbeitung wird die Umformrolle senkrecht zu der Plattenebene des Werkstücks auf den zu bearbeitenden Werkstückteil abgesenkt und mit der konischen Mantelfläche unter Druck an die umzuformende Kante des Werkstückteils angelegt. Aufgrund der Federelastizität des oder der zwischen den beiden Werkstückteilen vorgesehenen Verbindungsstege kann sich der druckbeaufschlagte Werkstückteil bei Bedarf selbsttätig gegenüber der Umformrolle ausrichten, ohne dass dadurch seine Position gegenüber dem anderen Werkstückteil dauerhaft verändert würde. Nach Beendigung der Kantenbearbeitung und nach Entlasten des bearbeiteten Werkstückteils von der Umformrolle stellt sich der bearbeitete Werkstückteil selbsttätig in seine Ausgangsposition zurück. In der Ausgangsposition ist der kantenbearbeitete Werkstückteil für eine weitere Zusatzbearbeitung definiert angeordnet.

Zur Gewährleistung der Festkörpergelenkeigenschaft und der damit verbundenen Elastizität des oder der Verbindungsstege sind erfindungsgemäß verschiedene Verfahrensweisen vorgesehen.

Gemäß Patentanspruch 2 wird als Festkörpergelenk ein Verbindungssteg erstellt, der an seinen Enden, an denen er in die beiden Werkstückteile übergeht, einen größeren Querschnitt aufweist als in einem zwischen den Enden vorgesehenen Bereich. Auf diese Art und Weise wird die Elastizität des Verbindungsstegs bewusst dem zwischen den Enden des Verbindungsstegs gelegenen Bereich in besonderem Maße zugeordnet.

Zur Gewährleistung eines günstigen Elastizitätsverhaltens des Verbindungsstegs wird der Übergangsbereich der V-Form des Verbindungsstegs in vorteilhafter Ausgestaltung des erfindungsgemäßen Trennverfahrens mit einem Querschnitt erstellt, der gegenüber dem Querschnitt der Schenkel der V-Form größenmäßig reduziert ist. Ergänzend oder alternativ wird der Verbindungssteg derart gestaltet, dass die Schenkel der V-Form des Verbindungsstegs einen Innenwinkel einschließen, der 5 Grad bis 45 Grad, insbesondere 10 Grad bis 30 Grad, beträgt (Patentanspruch 3). Ein nicht zu klein bemessener Innenwinkel zwischen den Schenkeln der V-Form des Verbindungsstegs hat überdies den Vorteil, dass Material, das zum Erstellen der V-Form des Verbindungsstegs zwischen den Schenkeln der V-Form zu entfernen ist, problemlos aus dem Zwischenraum zwischen den Schenkeln abgeführt werden kann.

Ebenfalls im Interesse eines günstigen Elastizitätsverhaltens des oder der als Festkörpergelenke ausgebildeten Verbindungsstege wird im Falle der in Patentanspruch 4 beschriebenen Variante des erfindungsgemäßen Verfahrens als Festkörpergelenk ein Verbindungssteg mit einer V-Form erstellt, deren Übergangsbereich zwischen den Schenkeln der V-Form entlang eines Kreisbogens und dabei über einen Mittelpunktswinkel von vorzugsweise mehr als 180 Grad verläuft. Ein relativ großer Radius des Übergangsbereichs verleiht dem Verbindungssteg eine besonders ausgeprägte Elastizität und verhindert einen Bruch des Übergangsbereichs bei dessen elastischer Verformung.

Aus fertigungstechnischer Sicht besonders vorteilhafte Varianten des erfindungsgemäßen Verfahrens sind in den Patentansprüchen 5 bis 8 beschrieben.

Gemäß den Patentansprüchen 5 und 7 bleibt bei der unvollständigen Trennung von zwei Werkstückteilen zwischen diesen ein einzelner Verbindungssteg stehen, während im Rahmen der Verfahren nach den Patentansprüchen 6 und 8 die beiden Werkstückteile unter Stehenlassen mehrerer einander benachbarter Verbindungsstege unvollständig voneinander getrennt werden. Sämtliche Verfahrensvarianten der Patentansprüche 5 bis 8 zielen darauf ab, die unvollständige Trennung der beiden Werkstückteile möglichst weitgehend in einem Zuge und folglich mit einer besonders vorteilhaften Bearbeitungsstrategie herbeizuführen.

Gemäß Patentanspruch 5 wird die gesamte unvollständige Trennung der beiden Werkstückteile in einem Zuge vollzogen.

Im Rahmen des Verfahrens gemäß Patentanspruch 6 werden in einem Zuge einander benachbarte Verbindungsstege teilweise und die zwischen einander benachbarten Verbindungsstegen verlaufende Trennfuge zwischen den beiden Werkstückteilen vollständig erstellt. Im nächsten Schritt wird einer der zunächst teilweise erstellten Verbindungsstege durch Erstellen der zweiten ihn ausbildenden Werkstücköffnung vervollständigt und unmittelbar anschließend an die letztgenannte Werkstücköffnung eine Trennfuge erstellt, die Konturen der beiden Werkstückteile erzeugt. Unmittelbar anschließend an die letztgenannte Trennfuge wird eine weitere Werkstücköffnung erstellt, die gemeinsam mit einer anderen Werkstücköffnung einen weiteren Verbindungssteg begrenzt.

Die Patentansprüche 7 und 8 betreffen Varianten des erfindungsgemäßen Verfahrens, im Falle derer die Erstellung der Werkstücköffnungen, die Verbindungsstege ausbilden, auf zwei separate Verfahrensschritte aufgeteilt ist. Da zunächst lediglich ein Teil der die Kontur der Werkstücköffnungen erzeugenden Trennfugen erstellt wird, bleibt derjenige Bereich des bearbeiteten Werkstücks, welcher die spätere Werkstücköffnung ausfüllt, zunächst noch an einen der zu erzeugenden Werkstückteile angebunden. Werkstückbewegungen, die nach dem teilweisen Erstellen einer Werkstücköffnung beispielsweise zur Erstellung einer Konturen der beiden Werkstückteile erzeugenden Trennfuge ausgeführt werden müssen, werden folglich von dem die spätere Werkstücköffnung ausfüllenden Werkstückbereich mitvollzogen. Würden die Werkstücköffnungen von vornherein vollständig erstellt, so müsste jeder der dabei anfallenden Werkstückausschnitte unmittelbar nach seiner Erzeugung entfernt werden, da andernfalls die Gefahr bestünde, dass die Werkstückausschnitte anschließende Werkstückbewegungen behindern.

In bevorzugter Weiterbildung des erfindungsgemäßen Trennverfahrens werden für die teilweise Erstellung der einen Verbindungssteg ausbildenden Werkstücköffnungen und für deren Vervollständigung unterschiedliche Bearbeitungswerkzeuge eingesetzt. Die Trennfugen, welche die Konturen der Werkstücköffnungen teilweise erzeugen, werden vorzugsweise durch Lasertrennen erstellt, während zur Vervollständigung der Werkstücköffnungen insbesondere Stanzwerkzeuge zum Einsatz kommen.

Patentanspruch 9 betrifft einen im Rahmen des erfindungsgemäßen Trennverfahrens vorgesehenen Verfahrensschritt zur vollständigen Trennung der zunächst unvollständig voneinander getrennten Werkstückteile. Erfindungsgemäß wird zu diesem Zweck an dem oder den Verbindungsstegen zunächst wenigstens eine Querschnittsreduzierung erzeugt, ehe durch Trennen an der oder den Querschnittsreduzierungen die durch den betreffenden Verbindungssteg hergestellte Verbindung der Werkstückteile gelöst wird. Die Querschnittsreduzierung eines Verbindungsstegs sorgt dafür, dass die beiden Werkstückteile funktionssicher voneinander getrennt werden können. Insbesondere ein manuelles Trennen der Werkstückteile kann auf diese Art und Weise ermöglicht werden.

Zur Erzeugung einer Querschnittsreduzierung eines Verbindungsstegs bieten sich erfindungsgemäß unterschiedliche Möglichkeiten. Denkbar ist insbesondere eine Druckumformung, beispielsweise eine prägende Bearbeitung des Verbindungsstegs.

In vorteilhafter Ausgestaltung der Erfindung wird die Querschnittsreduzierung eines Verbindungsstegs an zumindest einem, vorzugsweise an beiden Enden des Verbindungsstegs erstellt. In diesem Fall werden der Verbindungssteg und der diesem benachbarte Werkstückteil unmittelbar dort voneinander getrennt, wo der Verbindungssteg an dem Werkstückteil ansetzt. Bei Einsatz eines geeigneten Trennwerkzeugs bleiben an dem Werkstückteil keine nennenswerten Spuren des Verbindungsstegs zurück und es ergibt sich an dem Werkstückteil eine Trennfläche guter Qualität.

Nachfolgend wird die Erfindung anhand beispielhafter schematischer Darstellungen näher erläutert. Es zeigen:
- Figur 1: eine bearbeitete Blechtafel mit innerhalb eines Restgitters angeordneten und durch Verbindungsstege mit dem Restgitter verbundenen Fertigteilen,
- Figur 2: das Detail II in Figur 1,
- Figuren 3 bis 5: Darstellungen zur Veranschaulichung des Trennverfahrens zur Erzeugung der bearbeiteten Blechtafel gemäß Figur 1,
- Figuren 6, 7: die bearbeitete Blechtafel gemäß Figur 1 während und nach einer zusätzlichen Kantenbearbeitung eines der Fertigteile,
- Figur 8: eine Darstellung zur Veranschaulichung des vollständigen Trennens der Fertigteile von dem Restgitter der bearbeiteten Blechtafel gemäß Figur 1 und
- Figur 9: von dem Bearbeitungsfall gemäß Figur 1 abweichende Möglichkeiten zur Anbindung von Fertigteilen mittels Verbindungsstegen.

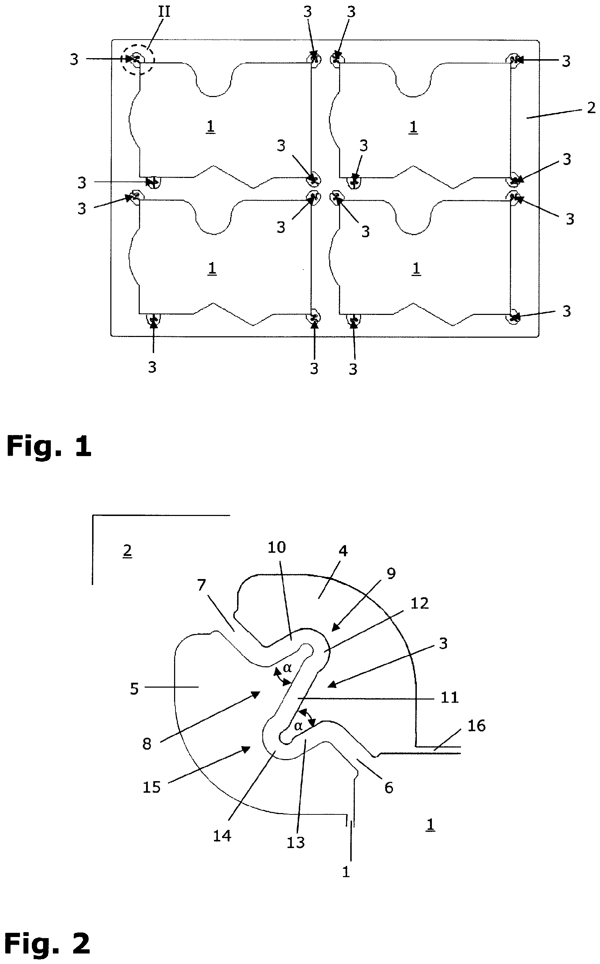

Ausweislich Figur 1 wurden durch trennende Bearbeitung einer aus einem elastisch verformbaren Werkstoff bestehenden Blechtafel Werkstückteile in Form von Fertigteilen 1 und eines Restgitters 2 sowie Verbindungsstege 3 erzeugt, welche die Fertigteile 1 und das Restgitter 2 miteinander verbinden. Die Verbindungsstege 3 wurden bei der trennenden Bearbeitung der Blechtafel stehengelassen. Die Fertigteile 1 und das Restgitter 2 sind folglich unvollständig voneinander getrennt.

Die Beschaffenheit der Verbindungsstege 3 ergibt sich im Einzelnen aus Figur 2, in welcher die Verhältnisse an der in Figur 1 linken oberen Ecke des bearbeiteten Werkstücks beziehungsweise der bearbeiteten Blechtafel in vergrößertem Maßstab dargestellt sind. Die übrigen Verbindungsstege 3 an der bearbeiteten Blechtafel stimmen mit dem in Figur 2 dargestellten Verbindungssteg 3 in ihrer Beschaffenheit grundsätzlich überein.

Der Verbindungssteg 3 ist aus dem Material der Blechtafel herausgearbeitet. Er wird durch zwei Werkstücköffnungen 4, 5 ausgebildet, die mit Abstand voneinander an der Blechtafel erstellt worden sind. Mit geradlinigen Enden 6, 7 setzt der Verbindungssteg 3 einerseits an einem der Fertigteile 1 und andererseits an dem Restgitter 2 an. In einem Bereich 8 zwischen den Enden 6, 7 ist der Verbindungssteg 3 mäanderförmig ausgebildet. Der Bereich 8 umfasst eine V-Form 9 mit Schenkeln 10, 11, einen die Schenkel 10, 11 miteinander verbindenden Übergangsbereich 12 sowie einen weiteren Schenkel 13, der durch einen weiteren Übergangsbereich 14 mit dem ihm benachbarten Schenkel 11 der V-Form 9 verbunden ist. Gemeinsam mit dem ihm benachbarten Schenkel 11 der V-Form 9 und dem weiteren Übergangsbereich 14 bildet der weitere Schenkel 13 eine weitere V-Form 15 des Verbindungsstegs 3 aus.

Der Übergangsbereich 12 der V-Form 9 und der weitere Übergangsbereich 14 der weiteren V-Form 15 verlaufen zwischen den Schenkeln 10, 11; 11, 13 jeweils entlang eines Kreisbogens, der sich über einen Mittelpunktswinkel von etwa 250 Grad erstreckt. Die Schenkel 10, 11 und auch die Schenkel 11, 13 schließen einen Innenwinkel α ein, der im gezeigten Beispielsfall etwa 30 Grad beträgt. Der Übergangsbereich 12 der V-Form 9 und der weitere Übergangsbereich 14 der weiteren V-Form 15 besitzen einen kleineren Querschnitt als die angrenzenden Schenkel 10, 11, 13.

Der aus dem Material der bearbeiteten Blechtafel bestehende Verbindungssteg 3 zeigt aufgrund der beschriebenen Gestaltung ein Elastizitätsverhalten in einer parallel zu der Zeichenebene von Figur 2 verlaufenden Plattenebene der bearbeiteten Blechtafel und bildet somit ein Festkörpergelenk. Nachdem die Enden 6, 7 des Verbindungsstegs 3 einen größeren Querschnitt und folglich eine größere Biegesteifigkeit besitzen als der mäanderförmige Bereich 8 zwischen den Enden 6, 7, verhält sich in erster Linie der mäanderförmige Bereich 8 des Verbindungsstegs 3 federelastisch.

Gemäß Figur 1 ist jedes der Fertigteile 1 durch vier Verbindungsstege 3 und somit durch vier Festkörpergelenke an das Restgitter 2 der bearbeiteten Blechtafel angebunden. Aufgrund der Elastizität der Verbindungsstege 3 können die Fertigteile 1 gegen die Wirkung einer Rückstellkraft ihre Position gegenüber dem Restgitter 2 ändern.

In Figur 2 ist eines der Fertigteile 1 in der Ausgangsposition gegenüber dem Restgitter 2 gezeigt, Wird das Fertigteil 1 aus der Ausgangsposition parallel zu der Plattenebene der bearbeiteten Blechtafel ausgelenkt, so werden die zwischen dem Fertigteil 1 und dem Restgitter 2 vorgesehenen Verbindungsstege 3 unter Änderung der Innenwinkel α zwischen den Schenkeln 10, 11, 13 der V-Form 9 und der weiteren V-Form 15 elastisch verformt. Aufgrund der Rückstellung des elastisch verformten Verbindungsstegs 3 in den Ausgangszustand kehrt das aus der Ausgangsposition ausgelenkte Fertigteil 1 selbsttätig in die Ausgangsposition zurück. Die Größe des Spiels, mit welchem die Fertigteile 1 an das Restgitter 2 angebunden sind, wird bestimmt durch die Weite von in Figur 2 ansatzweise erkennbaren Trennfugen 16 zwischen den Fertigteilen 1 und dem Restgitter 2.

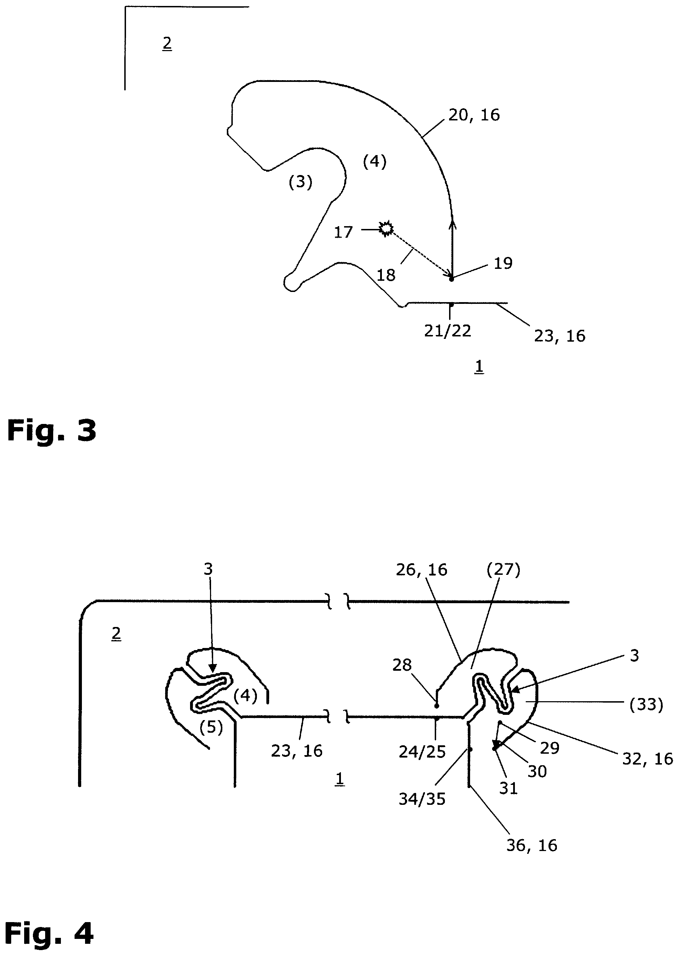

In dem dargestellten Beispielsfall sind die Verhältnisse gemäß Figur 1 das Ergebnis einer trennenden Bearbeitung einer Blechtafel durch Lasertrennen und Stanzen. Der Bearbeitungsablauf ist in den Figuren 3 bis 5 im Einzelnen veranschaulicht, wobei die Figuren 3 und 4 Teile der Bahnen zeigen, längs derer sich ein zum Lasertrennen eingesetzter Laserstrahl und die zu bearbeitende Blechtafel in der Plattenebene der Blechtafel relativ zueinander bewegen, um das in Figur 1 oben links angeordnete Fertigteil 1 unvollständig von dem Restgitter 2 zu trennen.

Die trennende Bearbeitung der Blechtafel wird auf einer herkömmlichen Stanz-Laser-Kombimaschine durchgeführt und ist numerisch gesteuert. Die Relativbewegung von Blechtafel und Laserstrahl zur trennenden Bearbeitung der Blechtafel wird durch Bewegen der Blechtafel relativ zu einem den Laserstrahl auf die Blechtafel richtenden Laserschneidkopf der Stanz-Laser-Kombimaschine erzeugt. Die Blechtafel wird zu diesem Zweck an einer herkömmlichen Koordinatenführung der Stanz-Laser-Kombimaschine fixiert und mittels der Koordinatenführung über eine Werkstückauflage der Maschine bewegt. Die Blechtafel wird dabei mittels Spannpratzen der Koordinatenführung gehalten, wobei die Spannpratzen im Bereich des Restgitters 2 an der Blechtafel angreifen.

In dem Koordinatensystem der numerischen Steuerung der Stanz-Laser-Kombimaschine ist die momentane Position der Blechtafel über die momentane Position der Koordinatenführung definiert. Nachdem die Koordinatenführung mittels der Spannpratzen im Bereich des Restgitters 2 an der Blechtafel angreift, steht die momentane Position der Koordinatenführung für die momentane Position des Restgitters 2. Die momentane Position der innerhalb des Restgitters 2 angeordneten Fertigteile 1 bestimmt die numerische Steuerung der Stanz-Laser-Kombimaschine anhand der momentanen Position der Koordinatenführung bzw. des Restgitters 2 unter Berücksichtigung eines in der numerischen Steuerung hinterlegten Belegungsplans, aus welchem die Verteilung der Fertigteile 1 über die Blechtafel hervorgeht.

Ausweislich Figur 3 beginnt die trennenden Bearbeitung der Blechtafel damit, dass der von dem Laserschneidkopf der Stanz-Laser-Kombimaschine ausgehende Laserstrahl an einer Einstichstelle 17 in die Blechtafel einsticht. Die Einstichstelle 17 liegt innerhalb der späteren Werkstücköffnung 4 an dem ersten Verbindungssteg 3, der in Figur 1 an der oberen linken Ecke des oben links angeordneten Fertigteils 1 zu erkennen ist.

Ausgehend von der Einstichstelle 17 wird der Laserstrahl längs eines ersten Bahnabschnitts 18 zu einem Startpunkt 19 bewegt, der auf einer Konturlinie 20 der Werkstücköffnung 4 liegt. Von dem Startpunkt 19 aus fährt der Laserstrahl die Konturlinie 20 der Werkstücköffnung 4 ab. Dabei erzeugt der Laserstrahl durch eine Trennfuge 16 jeweils teilweise die Kontur der Werkstücköffnung 4 und die Kontur des ersten Verbindungsstegs 3. Die Konturlinie 20 der Werkstücköffnung 4 endet in einem Endpunkt 21, der gleichzeitig einen Startpunkt 22 einer Konturlinie 23 des Fertigteils 1 und des Restgitters 2 bildet.

Der Laserstrahl überfährt den Endpunkt 21 bzw. Startpunkt 22 ohne Unterbrechung und fährt unmittelbar anschließend an die Konturlinie 20 der Werkstücköffnung 4 die Konturlinie 23 des Fertigteils 1 und des Restgitters 2 ab. Dabei erzeugt der Laserstrahl durch eine weitere Trennfuge 16 Konturen des Fertigteils 1 und des Restgitters 2.

Gemäß Figur 4 wird der Laserstrahl längs der Konturlinie 23 geführt, bis er einen Endpunkt 24 der Konturlinie 23 erreicht. Der Endpunkt 24 der Konturlinie 23 ist gleichzeitig ein Startpunkt 25 einer Konturlinie 26 einer Werkstücköffnung 27, die ihrerseits einen dem ersten Verbindungssteg 3 benachbarten zweiten Verbindungssteg 3 ausbildet.

Der Laserstrahl 4 überfährt den Endpunkt 24 bzw. Startpunkt 25 ohne Unterbrechung und fährt die Konturlinie 26 bis zu einem Endpunkt 28 ab. Dadurch erzeugt der Laserstrahl unmittelbar anschließend an die Konturen des Fertigteils 1 und des Restgitters 2 erzeugende Trennfuge 16 eine Trennfuge 16, die jeweils teilweise die Werkstücköffnung 27 und den zweiten Verbindungssteg 3 erzeugt.

Ebenso wie der Startpunkt 19 der Konturlinie 20 der Werkstücköffnung 4 ist auch der Endpunkt 28 der Konturlinie 26 der Werkstücköffnung 27 von der Konturlinie 23 des Fertigteils 1 und des Restgitters 2 beabstandet. Die Trennfugen 16, welche die Konturen der Werkstücköffnungen 4, 27 teilweise erzeugen, beginnen beziehungsweise enden folglich mit Abstand von der Konturen des Fertigteils 1 und des Restgitters 2 erzeugenden Trennfuge 16. Infolgedessen bleiben die innerhalb der Konturlinien 20, 26 beziehungsweise der entsprechenden Trennfugen 16 angeordneten Bereiche der Blechtafel zunächst mit dem späteren Restgitter 2 verbunden.

Mit Erreichen des Endpunkts 28 der Konturlinie 26 der Werkstücköffnung 27 wird der Laserstrahl ausgeschaltet. Anschließend wird die bearbeitete Blechtafel mittels der Koordinatenführung der Stanz-Laser-Kombimaschine relativ zu deren Laserschneidkopf bewegt, bis der Laserschneidkopf oberhalb einer Einstichstelle 29 zu liegen kommt. Der Laserstrahl wird nun wieder eingeschaltet und sticht an der Einstichstelle 29 in die Blechtafel ein. Ausgehend von der Einstichstelle 29 wird der Laserstrahl entlang eines ersten Bahnabschnitts 30 bis zu einem Startpunkt 31 einer Konturlinie 32 einer Werkstücköffnung 33 bewegt. Durch die dabei erstellte Trennfuge 16 wird die Werkstücköffnung 33, die gemeinsam mit der Werkstücköffnung 27 den zweiten Verbindungssteg 3 ausbildet, teilweise erzeugt. Der zweite Verbindungssteg 3 wird durch die entlang der Konturlinie 32 verlaufende Trennfuge 16 vervollständigt.

Die Konturlinie 32 der Werkstücköffnung 33 endet an einem Endpunkt 34, der gleichzeitig einen Startpunkt 35 einer Konturlinie 36 bildet. Die Konturlinie 36 beschreibt den Verlauf einer Trennfuge, durch welche Konturen des Fertigteils 1 und des Restgitters 2 erzeugt werden. Der Laserstrahl überfährt auch den Endpunkt 34 bzw. den Startpunkt 35 ohne Unterbrechung und erstellt unmittelbar anschließend an die längs der Konturlinie 32 der Werkstücköffnung 33 verlaufende Trennfuge 16 eine Trennfuge 16, welche Konturen des Fertigteils 1 und des Restgitters 2 erzeugt.

Bei seiner Bewegung längs der Konturlinie 36 erreicht der Laserstrahl einen außerhalb der Darstellung von Figur 4 liegenden Endpunkt der Konturlinie 36, der gleichzeitig den Startpunkt einer Konturlinie des dritten Verbindungsstegs 3 und einer diesen ausbildenden Werkstücköffnung bildet. In Figur 1 ist der dritte Verbindungssteg 3 an der unteren rechten Ecke des oben links angeordneten Fertigteils 1 zu erkennen. Die dann folgenden Abläufe entsprechen den Abläufen beim Abfahren der Konturlinie 26 der Werkstücköffnung 27. Es wird eine Trennfuge erstellt, die eine Kontur des dritten Verbindungsstegs 3 und eine Kontur einer der den dritten Verbindungssteg 3 ausbildenden Werkstücköffnungen teilweise erzeugt. Anschließend wird der Laserstrahl ausgeschaltet und nach einer erneuten Umsetzbewegung der bearbeiteten Blechtafel sticht der Laserstrahl an der gegenüberliegenden Seite des dritten Verbindungsstegs 3 in die Blechtafel ein. Es folgen Abläufe, welche den vorstehend beschriebenen Abläufen beim teilweisen Erzeugen der Werkstücköffnung 33 entsprechen. Die zweite der den dritten Verbindungssteg 3 ausbildenden Werkstücköffnungen wird teilweise erstellt, der dritte Verbindungssteg 3 wird vervollständigt.

Anschließend werden in der beschriebenen Art und Weise die beiden den vierten Verbindungssteg 3 (in Figur 1 an der linken unteren Ecke des oben links angeordneten Fertigteils 1) ausbildenden Werkstücköffnungen teilweise und der vierte Verbindungssteg 3 vollständig erstellt. Schließlich erreicht der Laserstrahl den in Figur 1 erkennbaren ersten Verbindungssteg 3. Der erste Verbindungssteg 3 wird durch Erstellen einer entsprechenden Trennfuge 16 vollständig, die gemeinsam mit der Werkstücköffnung 4 den ersten Verbindungssteg 3 ausbildende Werkstücköffnung 5 wird teilweise erzeugt.

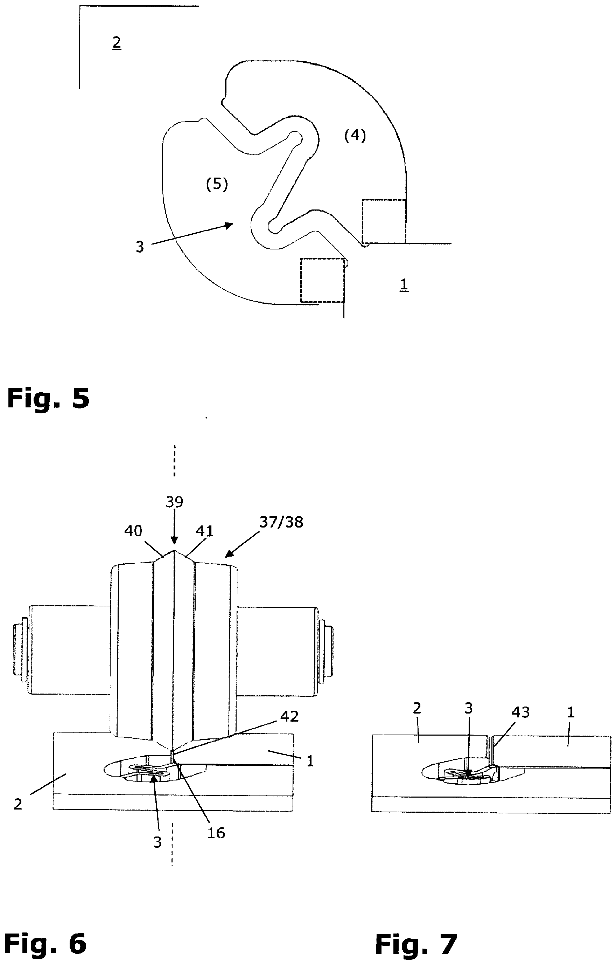

Die Werkstückbereiche, welche die zur Ausbildung der Verbindungsstege 3 vorgesehenen Werkstücköffnungen ausfüllen, sind alle noch mit dem Restgitter 2 verbunden. Hergestellt wird diese Verbindung in Werkstückbereichen nahe der Verbindungsstege 3. In Figur 5 sind die an dem ersten Verbindungssteg 3 gelegenen Werkstückbereiche gestrichelt umrahmt. Aufgrund der fortbestehenden Anbindung der die Werkstücköffnungen ausfüllenden Werkstückbereiche an das Restgitter 2 mussten im Laufe der bisherigen Bearbeitung der Blechtafel keine Werkstückausschnitte abgeführt werden. Vielmehr konnten die von den Konturlinien der Werkstücköffnungen eingefassten Werkstückbereiche die zur Bearbeitung der Blechtafel auszuführenden Bewegungen der Blechtafel relativ zu dem Laserschneidkopf der Stanz-Laser-Kombimaschine mitvollziehen. Bislang waren daher weder zeitaufwändige Entladevorgänge erforderlich, noch wurden die Bewegungen der zu bearbeitenden Blechtafel relativ zu dem Laserschneidkopf der Stanz-Laser-Kombimaschine durch freie Werkstückausschnitte behindert.

Abschließend werden die Restverbindungen zwischen den die Werkstücköffnungen ausfüllenden Werkstückbereichen und dem Restgitter 2 entfernt. Zu diesem Zweck wird die Blechtafel zu der Stanzstation der Stanz-Laser-Kombimaschine bewegt, wo mittels eines entsprechenden Stanzwerkzeuges nacheinander sämtliche Restverbindungen zwischen den die Werkstücköffnungen ausfüllenden Werkstückbereichen und dem Restgitter 2 ausgestanzt werden.

Die Blechtafel befindet sich nun in dem Bearbeitungszustand gemäß Figur 1. Die Fertigteile 1 und das Restgitter 2 sind unvollständig voneinander getrennt, die als Festkörpergelenke ausgebildeten Verbindungsstege 3 stellen eine vorläufige federelastische Verbindung zwischen den Fertigteilen 1 und dem Restgitter 2 her.

An die trennende Bearbeitung der Blechtafel schließt sich nun eine zusätzliche Bearbeitung an. Dabei werden die bei der trennenden Bearbeitung der Blechtafel erzeugten Fertigteile 1 einer Kantenbearbeitung unterzogen.

Auch die zusätzliche Bearbeitung wird an der Stanzstation der Stanz-Laser-Kombimaschine durchgeführt. Dort wird das zuletzt verwendete Stanzwerkzeug gegen ein Umformwerkzeug, im vorliegenden Beispielsfall gegen ein Rollkneifwerkzeug 37 ausgetauscht. Das Rollkneifwerkzeug 37 besteht aus einer in Figur 6 dargestellten Umformrolle 38 die in die obere Werkzeugaufnahme an der Stanzstation der Stanz-Laser-Kombimaschine eingewechselt wird. Der Umformrolle 38 zugeordnet ist ein in den Abbildungen nicht gezeigtes Auflager, das an der unteren Werkzeugaufnahme der Stanz-Laser-Kombimaschine montiert wird.

Die Umformrolle 38 des Rollkneifwerkzeugs 37 ist mit einem doppelkonischen Wulst 39 versehen, der zwei konische Umformflächen 40, 41 aufweist. Die konischen Umformflächen 40, 41 sind bezüglich einer in Figur 6 gestrichelt angedeuteten Mittelebene des doppelkonischen Wulstes 39 spiegelsymmetrisch.

Zur Durchführung der zusätzlichen Bearbeitung wird zunächst die Blechtafel in dem Bearbeitungszustand gemäß Figur 1 mittels der Koordinatenführung der Stanz-Laser-Kombimaschine gegenüber dem an der Stanzstation der Stanz-Laser-Kombimaschine eingewechselten Rollkneifwerkzeug 37 positioniert. Numerisch gesteuert wird die bearbeitete Blechtafel dabei derart angeordnet, dass die Längsmittelebene einer zwischen dem zu bearbeitenden Fertigteil 1 und dem Restgitter 2 verlaufenden Trennfuge 16 mit der Mittelebene des doppelkonischen Wulstes 39 der Umformrolle 38 zusammenfällt. Anschließend wird die Umformrolle 38 auf die bearbeitete Blechtafel abgesenkt und die konische Umformfläche 41 wird unter Druck an eine umzuformende Werkstückkante 42 des zu bearbeitenden Fertigteils 1 angelegt. Anschließend wird die bearbeitete Blechtafel mittels der Koordinatenführung der Stanz-Laser-Kombimaschine derart bewegt, dass die an der stationären Werkzeugaufnahme der Stanzstation der Stanz-Laser-Kombimaschine drehbar gelagerte Umformrolle 38 längs der umzuformenden Werkstückkante 42 des Fertigteils 1 abrollt und dabei an dem Fertigteil 1 eine Fase 43 erzeugt (Figuren 6, 7). Das Fertigteil 1 wird dabei an der Unterseite durch das nicht gezeigte Auflager des Rollkneifwerkzeugs 37 abgestützt.

Die Positionierung der bearbeiteten Blechtafel vor Beginn der zusätzlichen Bearbeitung mittels des Rollkneifwerkzeugs 37 und auch die Bewegung der bearbeiteten Blechtafel während der Kantenumformung an dem Fertigteil 1 wird von der numerischen Steuerung der Stanz-Laser-Kombimaschine auf der Grundlage der in der Steuerung hinterlegten Daten gesteuert. Von diesen Steuerdaten nicht berücksichtigt werden aber beispielsweise unvorhersehbare Fertigungstoleranzen an der bearbeiteten Blechtafel, etwa eine unerwünschte Fehlstellung des zu bearbeitenden Fertigteils 1 gegenüber dem Restgitter 2 aufgrund eines wärmebedingten Materialverzugs bei der trennenden Laserbearbeitung der Blechtafel. Es ist daher denkbar, dass nach der anfänglichen Positionierung der zusätzlich zu bearbeitenden Blechtafel gegenüber dem Rollkneifwerkzeug 37 die Längsmittelebene der von der zu bearbeitenden Werkstückkante 42 begrenzten Trennfuge 16 gegenüber der Mittelebene des doppelkonischen Wulstes 39 an der Umformrolle 38 des Rollkneifwerkzeugs 37 seitlich versetzt ist.

Wird in einem derartigen Fall die Umformrolle 38 mit der konischen Umformfläche 41 an die Werkstückkante 42 des zu bearbeitenden Fertigteils 1 angelegt, so kann sich das Fertigteil 1 aufgrund seiner Beweglichkeit relativ zu dem Restgitter 2 gegenüber dem doppelkonischen Wulst 39 der Umformrolle 38 selbsttätig ausrichten und dadurch den zunächst bestehenden Versatz zwischen der Längsmittelebene der Trennfuge 16 und der Mittelebene des doppelkonischen Wulstes 39 der Umformrolle 38 ausgleichen. Entsprechend kann sich das Fertigteil 1 während der Abrollbewegung der Umformrolle 38 längs der Werkstückkante 42 selbsttätig gegenüber der Umformrolle 38 justieren.

Aufgrund der Federelastizität der Verbindungsstege 3 ist die mit der selbsttätigen Ausrichtung des Fertigteils 1 gegenüber der Umformrolle 38 verbundene Auslenkung des Fertigteils 1 aus der Ausgangsposition gegenüber dem Restgitter 2 nicht bleibend. Die Federelastizität der Verbindungsstege 3 bewirkt vielmehr, dass sich das Fertigteil 1 nach Beendigung der Umformung der Werkstückkante 42 und nach der Entlastung des Fertigteils 1 von der Umformrolle 38 selbsttätig in seine Ausgangsposition zurückbewegt.

Dieser Umstand ist insbesondere dann von Bedeutung, wenn das Fertigteil 1 nach der Umformung der Werkstückkante 42 an weiteren Werkstückkanten, beispielsweise zunächst an einer senkrecht zu der Werkstückkante 42 verlaufenden Werkstückkante mit einer Fase zu versehen ist. Wäre auch diese Werkstückkante von Anfang an gegenüber dem Restgitter 2 abweichend von der Sollposition angeordnet und würden sich die Verbindungsstege 3 bei der mit der Kantenbearbeitung verbundenen selbsttätigen Ausrichtung des Fertigteils 1 bleibend verformen, so ergäbe sich eine unkontrollierbare Verkettung von Positionsungenauigkeiten, unter welcher die Genauigkeit der Kantenbearbeitung des Fertigteils 1 erheblich leiden würde.

Nach Beendigung der Kantenbearbeitung sämtlicher Fertigteile 1 sind die Fertigteile 1 und das Restgitter 2 vollständig voneinander zu trennen. Zu diesem Zweck werden zunächst die Verbindungsstege 3 zwischen den Fertigteilen 1 und dem Restgitter 2 an den Enden 6, 7 mit jeweils einer Querschnittsreduzierung versehen. Auch dieser Verfahrensschritt wird an der Stanzstation der Stanz-Laser-Kombimaschine durchgeführt. Zum Einsatz kommt dabei ein Umformwerkzeug 44, das einen hohlzylindrischen Umformstempel 45 in der oberen Werkzeugaufnahme der Stanz-Laser-Kombimaschine und eine Werkstückauflage in der unteren Werkzeugaufnahme der Stanz-Laser-Kombimaschine umfasst. An der dem Werkstück zugewandten Seite ist die Wand des hohlzylindrischen Umformstempels 45 mit einer einwärts verlaufenden Fase versehen. Der das umzuformende Werkstück beaufschlagende Rand des hohlzylindrischen Umformstempels 45 besitzt dementsprechend einen trapezförmigen Querschnitt.

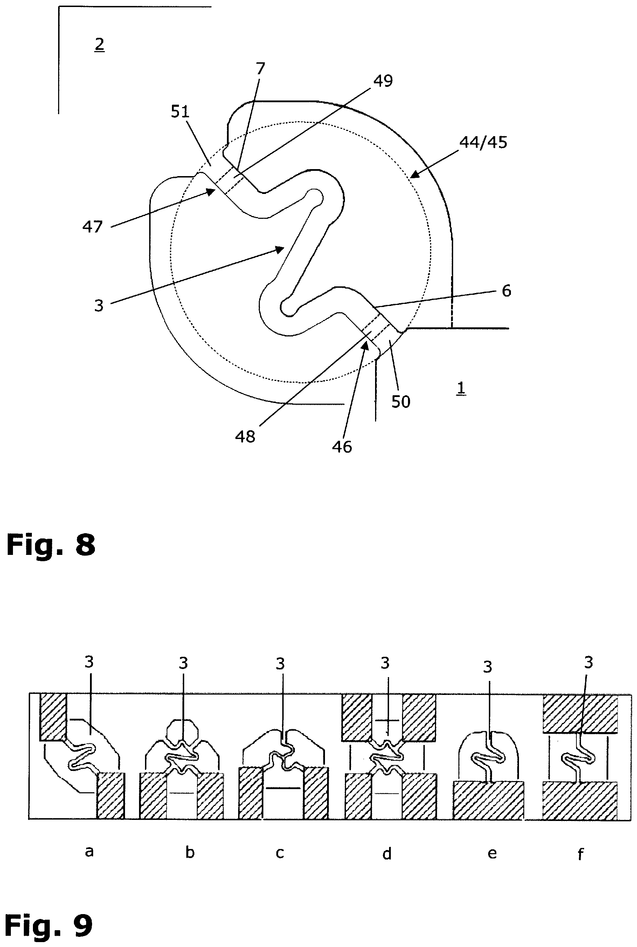

In Figur 8 gestrichelt angedeutet ist die senkrechte Projektion der achsparallelen äußeren Mantelfläche des hohlzylindrischen Umformstempels 45 auf einen Verbindungssteg 3. Der Durchmesser des hohlzylindrischen Umformstempels 45 ist dementsprechend exakt auf die Abmessungen des zu bearbeitenden Verbindungsstegs 3 abgestimmt.

Mittels der Koordinatenführung der Stanz-Laser-Kombimaschine wird die bearbeitete Blechtafel mit den kantenbearbeiteten Fertigteilen 1 gegenüber dem Umformwerkzeug 44 derart positioniert, dass sich die aus Figur 8 ersichtliche gegenseitige Anordnung des Umformstempels 45 des Umformwerkzeugs 44 einerseits und des zu bearbeitenden Verbindungsstegs 3 andererseits ergibt.

Anschließend wird der Verbindungssteg 3 durch Absenken des Umformstempels 45 mit dessen freiem Ende beaufschlagt. Dadurch wird der Verbindungssteg 3 an den Enden 6, 7 mit in Figur 8 gestrichelt angedeuteten Querschnittsreduzierungen 46, 47 versehen. Aufgrund des trapezförmigen Querschnitts des den Verbindungssteg 3 beaufschlagenden Randes des Umformstempels 45 besitzen die Querschnittsreduzierungen 46, 47 an dem Verbindungssteg 3 gegen die Horizontale geneigte Schrägflächen 48, 49 sowie horizontale Basisflächen 50, 51.

Abschließend wird der Verbindungssteg 3 an den Querschnittsreduzierungen 46, 47 von dem Fertigteil 1 und dem Restgitter 2 getrennt. Das Trennen kann manuell erfolgen. Denkbar ist aber auch der Einsatz von Trennwerkzeugen. Beispielsweise kann die Verbindung zwischen dem Verbindungssteg 3 einerseits und dem Fertigteil 1 sowie dem Restgitter 2 andererseits mittels eines Laserstrahls im Bereich der Basisflächen 50, 51 der Querschnittsreduzierungen 46, 47 des Verbindungsstegs 3 durchtrennt werden. In jedem Fall wird darauf geachtet, dass an dem Fertigteil 1 bei der Trennung allenfalls geringfügige Spuren des Verbindungsstegs 3 zurückbleiben.

Abweichend von den in Figur 1 dargestellten Verhältnissen besteht insbesondere auch die Möglichkeit, mehrere Fertigteile mittels eines gemeinsamen elastischen Verbindungsstegs an ein Restgitter anzubinden und/oder Fertigteile durch einen oder mehrere elastische Verbindungsstege miteinander zu verbinden. Beispielhaft sind derartige Bearbeitungsfälle in Figur 9 dargestellt. Unvollständig voneinander und/oder von einem Restgitter getrennte Fertigteile sind dabei schraffiert wiedergegeben.

Von links nach rechts zeigt Figur 9 Verbindungsstege zur Eck-Anbindung zweier Fertigteile untereinander (Beispiel a), zur Eck-Anbindung zweier Fertigteile an ein Restgitter (Beispiele b, c), zur Eck-Anbindung von vier Fertigteilen untereinander (Beispiel d), zur Kantenanbindung eines Fertigteils an ein Restgitter (Beispiel e) und zur Kantenanbindung zweier Fertigteile untereinander (Beispiel f).

## Patentansprüche

1. Verfahren zum trennenden Bearbeiten von plattenartigen Werkstücken aus einem elastisch verformbaren Werkstoff, insbesondere zum trennenden Bearbeiten von Blechen, wobei zwei Werkstückteile (1, 2) voneinander getrennt werden,
• indem die beiden Werkstückteile (1, 2) zunächst unter Stehenlassen wenigstens eines die beiden Werkstückteile (1, 2) miteinander verbindenden Verbindungsstegs (3) unvollständig voneinander getrennt werden und
• indem die beiden Werkstückteile (1, 2) anschließend durch Lösen der durch den Verbindungssteg (3) hergestellten Verbindung vollständig voneinander getrennt werden,
wobei der wenigstens eine Verbindungssteg (3) als Festkörpergelenk mit einer Form erstellt wird, aufgrund derer der Verbindungssteg (3) die beiden Werkstückteile (1, 2) derart miteinander verbindet, dass die beiden Werkstückteile (1, 2) unter elastischer Verformung des Verbindungsstegs (3) gegen die Wirkung einer Rückstellkraft relativ zueinander bewegbar sind, **dadurch gekennzeichnet, dass**
als Festkörpergelenk ein Verbindungssteg (3) mit einer Mäanderform erstellt wird, die umfasst
• eine V-Form (9), die zwei Schenkel (10, 11) und einen Übergangsbereich (12) aufweist, welcher die Schenkel (10, 11) miteinander verbindet, wobei die Schenkel (10, 11) einen spitzen Innenwinkel (α) einschließen und zu dem Übergangsbereich (12) hin konvergieren und wobei jeder der Schenkel (10, 11) über ein von dem Übergangsbereich (12) abliegendes Schenkelende an einen der Werkstückteile (1, 2) angebunden ist sowie
• einen weiteren Schenkel (13),
wobei der weitere Schenkel (13) durch einen weiteren Übergangsbereich (14) mit einem ihm benachbarten Schenkel (11) der V-Form (9) verbunden ist und wobei der weitere Schenkel (13) und der ihm benachbarte Schenkel (11) der V-Form (9) eine weitere V-Form (15) des Verbindungsstegs (3) ausbilden, indem der weitere Schenkel (13) und der ihm benachbarte Schenkel (11) der V-Form (9) als Schenkel der weiteren V-Form (15) vorgesehen sind und als solche einen weiteren spitzen Innenwinkel (a) einschließen und zu dem weiteren Übergangsbereich (14) hin konvergieren.

2. Verfahren nach Anspruch 1, **dadurch gekennzeichnet, dass** als Festkörpergelenk ein Verbindungssteg (3) erstellt wird, der an jedem seiner Enden (6, 7) in eines der beiden Werkstückteile (1, 2) übergeht und der an seinen Enden (6, 7) einen größeren Querschnitt aufweist als in einem zwischen den Enden (6, 7) vorgesehenen Bereich (8).

3. Verfahren nach einem der vorhergehenden Ansprüche, **dadurch gekennzeichnet dass** der Übergangsbereich (12) der V-Form (9) des Verbindungsstegs (3) mit einem Querschnitt erstellt wird, der gegenüber dem Querschnitt der Schenkel (10, 11) der V-Form (9) größenmäßig reduziert ist und/oder dass der Innenwinkel (α), welchen die Schenkel (10, 11) der V-Form (9) des Verbindungsstegs (3) einschließen, 5 Grad bis 45 Grad, insbesondere 10 Grad bis 30 Grad, beträgt.

4. Verfahren nach einem der vorhergehenden Ansprüche, **dadurch gekennzeichnet, dass** als Festkörpergelenk ein Verbindungssteg (3) mit einer V-Form (9) erstellt wird, deren Übergangsbereich (12) zwischen den Schenkeln (10, 11) der V-Form (9) entlang eines Kreisbogens verläuft, der sich vorzugsweise über einen Mittelpunktswinkel von mehr als 180 Grad erstreckt.

5. Verfahren nach einem der vorhergehenden Ansprüche, **dadurch gekennzeichnet, dass** die beiden Werkstückteile (1, 2) unter Stehenlassen eines einzelnen Verbindungsstegs (3) unvollständig voneinander getrennt werden, indem an dem Werkstück zwei unter Ausbildung des Verbindungsstegs (3) voneinander beabstandete Werkstücköffnungen (4, 5; 27, 33) erstellt werden, wobei zunächst eine der Werkstücköffnungen (4, 5; 27, 33) erstellt wird, wobei an die eine der Werkstücköffnungen (4, 5; 27, 33) unmittelbar anschließend eine Trennfuge (16) erstellt wird, die Konturen der beiden Werkstückteile (1, 2) erzeugt und wobei an die Trennfuge (16) unmittelbar anschließend die andere der Werkstücköffnungen (4, 5; 27, 33) erstellt wird.

6. Verfahren nach einem der Ansprüche 1 bis 4, **dadurch gekennzeichnet, dass** die beiden Werkstückteile (1, 2) unter Stehenlassen von mit Abstand einander benachbarten Verbindungsstegen (3) unvollständig voneinander getrennt werden, indem an dem Werkstück Werkstücköffnungen (4, 5; 27, 33) erstellt werden, die paarweise unter Ausbildung eines Verbindungsstegs (3) voneinander beabstandet sind, wobei zunächst eine der Werkstücköffnungen (4, 5; 27, 33) erstellt wird, die einen ersten der Verbindungsstege (3) ausbilden, wobei an die eine der Werkstücköffnungen (4, 5; 27, 33) unmittelbar anschließend eine Trennfuge (16) erstellt wird, die Konturen der beiden Werkstückteile (1, 2) erzeugt und wobei an die Trennfuge (16) unmittelbar anschließend eine der Werkstücköffnungen (4, 5; 27, 33) erstellt wird, die einen dem ersten Verbindungssteg (3) benachbarten Verbindungssteg (3) ausbilden.

7. Verfahren nach einem der Ansprüche 1 bis 4, **dadurch gekennzeichnet, dass** die beiden Werkstückteile (1, 2) unter Stehenlassen eines einzelnen Verbindungsstegs (3) unvollständig voneinander getrennt werden, indem an dem Werkstück zwei unter Ausbildung des Verbindungsstegs (3) voneinander beabstandete Werkstücköffnungen (4, 5; 27, 33) erstellt werden, wobei zunächst eine der Werkstücköffnungen (4, 5; 27 ,33) teilweise und dabei im Umfang einer eine Kontur der Werkstücköffnung (4, 5; 27, 33) und des Verbindungsstegs (3) jeweils teilweise erzeugenden Trennfuge (16) erstellt wird, wobei an die die Kontur der Werkstücköffnung (4, 5; 27, 33) und des Verbindungsstegs (3) jeweils teilweise erzeugende Trennfuge (16) unmittelbar anschließend eine Trennfuge (16) erstellt wird, die Konturen der beiden Werkstückteile (1, 2) erzeugt, wobei an die Konturen der beiden Werkstückteile (1, 2) erzeugende Trennfuge (16) unmittelbar anschließend die andere der Werkstücköffnungen (4, 5; 27, 33) teilweise und dabei im Umfang einer eine Kontur der anderen Werkstücköffnung (4, 5; 27, 33) teilweise erzeugenden und die Kontur des Verbindungsstegs (3) vervollständigenden Trennfuge (16) erstellt wird und wobei schließlich die zunächst teilweise erstellten Werkstücköffnungen (4, 5; 27, 33) vervollständigt werden.

8. Verfahren nach einem der Ansprüche 1 bis 4, **dadurch gekennzeichnet, dass** die beiden Werkstückteile (1, 2) unter Stehenlassen von mit Abstand einander benachbarten Verbindungsstegen (3) unvollständig voneinander getrennt werden, indem an dem Werkstück Werkstücköffnungen (4, 5; 27, 33) erstellt werden, die paarweise unter Ausbildung eines Verbindungsstegs (3) voneinander beabstandet sind, wobei zunächst eine der Werkstücköffnungen (4, 5; 27, 33), die einen ersten der Verbindungsstege (3) ausbilden, teilweise und dabei im Umfang einer eine Kontur der Werkstücköffnung (4, 5; 27, 33) und des ersten Verbindungsstegs (3) jeweils teilweise erzeugenden Trennfuge (16) erstellt wird, wobei an die die Kontur der Werkstücköffnung (4, 5; 27, 33) und des ersten Verbindungsstegs (3) jeweils teilweise erzeugende Trennfuge (16) unmittelbar anschließend eine Trennfuge erstellt wird, die Konturen der beiden Werkstückteile (1, 2) erzeugt, wobei an die Konturen der beiden Werkstückteile (1, 2) erzeugende Trennfuge (16) unmittelbar anschließend eine der Werkstücköffnungen (4, 5; 27, 33), die einen dem ersten Verbindungssteg (3) benachbarten zweiten Verbindungssteg (3) ausbilden, teilweise und dabei im Umfang einer eine Kontur der Werkstücköffnung (4, 5; 27, 33) und des zweiten Verbindungsstegs (3) jeweils teilweise erzeugenden Trennfuge (16) erstellt wird, wobei anschließend die andere der Werkstücköffnungen (4, 5; 27, 33), welche den zweiten Verbindungssteg (3) ausbilden, im Umfang einer eine Kontur der anderen Werkstücköffnung (4, 5; 27, 33) teilweise erzeugenden und die Kontur des zweiten Verbindungsstegs (3) vervollständigenden Trennfuge (16) erstellt wird, wobei an die die Kontur der anderen Werkstücköffnung (4, 5; 27, 33) teilweise erzeugende und die Kontur des zweiten Verbindungsstegs (3) vervollständigende Trennfuge (16) unmittelbar anschließend eine Trennfuge erstellt wird, die Konturen der beiden Werkstückteile (1, 2) erzeugt, wobei zuletzt an eine Konturen der beiden Werkstückteile (1, 2) erzeugende Trennfuge (16) unmittelbar anschließend eine Trennfuge (16) erstellt wird, welche eine Kontur der zweiten den ersten Verbindungssteg (3) begrenzenden Werkstücköffnung (4, 5; 27, 33) teilweise erzeugt und die Kontur des ersten Verbindungstegs (3) vervollständigt und wobei schließlich die zunächst teilweise erstellten Werkstücköffnungen (4, 5; 27, 33) vervollständigt werden.

9. Verfahren nach einem der vorhergehenden Ansprüche, **dadurch gekennzeichnet, dass** die beiden Werkstückteile (1, 2) vollständig voneinander getrennt werden, indem an dem wenigstens einen Verbindungssteg (3) zunächst, vorzugsweise an zumindest einem Ende (6, 7) des Verbindungsstegs (3), eine Querschnittsreduzierung (46, 47) des Verbindungsstegs (3) erzeugt wird, ehe durch Trennen an der Querschnittsreduzierung (46, 47) die durch den Verbindungssteg (3) hergestellte Verbindung der Werkstückteile (1, 2) gelöst wird.

10. Verfahren zum Bearbeiten von plattenartigen Werkstücken aus einem elastisch verformbaren Werkstoff, insbesondere zum Bearbeiten von Blechen,
• wobei das Werkstück trennend bearbeitet wird, indem zwei Werkstückteile (1, 2) zunächst unter Stehenlassen wenigstens eines die beiden Werkstückteile (1, 2) miteinander verbindenden Verbindungsstegs (3) unvollständig und anschließend durch Lösen der durch den Verbindungssteg (3) hergestellten Verbindung vollständig voneinander getrennt werden und
• wobei nach dem unvollständigen und vor dem vollständigen Trennen der beiden Werkstückteile (1, 2) wenigstens einer der Werkstückteile (1, 2) zusätzlich bearbeitet wird,
**dadurch gekennzeichnet, dass**
das Werkstück nach dem Verfahren gemäß einem der vorhergehenden Ansprüche trennend bearbeitet wird.

11. Verfahren nach Anspruch 10, **dadurch gekennzeichnet, dass** nach dem unvollständigen und vor dem vollständigen Trennen der beiden Werkstückteile (1, 2) wenigstens einer der Werkstückteile (1, 2) an einer Werkstückkante (42) zusätzlich bearbeitet wird.

## Claims

1. Method for the separating machining of plate-like workpieces made of an elastically deformable material, in particular for the separating machining of sheet metal, wherein two workpiece parts (1, 2) are separated from one another,
• in that the two workpiece parts (1, 2) are initially separated from one another incompletely, leaving behind at least one connecting web (3) connecting the two workpiece parts (1, 2) to one another and
• in that the two workpiece parts (1, 2) are then separated from one another completely by removing the connection created by the connecting web (3),
wherein the at least one connecting web (3) is created as a flexure bearing having a form due to which the connecting web (3) connects the two workpiece parts (1, 2) to one another in such a manner that the two workpiece parts (1, 2) are movable relative to one another with elastic deformation of the connecting web (3) against the action of a restoring force
**characterized in that**
the flexure bearing is created as a connecting web (3) with a meandering shape which meandering shape comprises
• a V-shape (9) which has two legs (10, 11) and a transition region (12) which connects the legs (10, 11) to one another, wherein the legs (10, 11) form an acute internal angle (α) and converge towards the transition region (12) and wherein each of the legs (10, 11) is attached by a leg end remote from the transition region (12) to one of the workpiece parts (1, 2) and
• a further leg (13),
wherein the further leg (13) is connected by a further transition region (14) to a leg (11) of the V-shape (9) adjacent to it and wherein the further leg (13) and the leg (11) adjacent to it of the V-shape (9) form a further V-shape (9) of the connecting web (3), **in that** the further leg (13) and the leg (11) of the V-shape (9) adjacent to it are provided as legs of the further V-shape (15) and, as such, form a further acute internal angle (α) and converge towards the further transition region (14).

2. Method according to Claim 1, **characterized in that** the flexure bearing is created as a connecting web (3) which passes into one of the two workpiece parts (1, 2) at each of its ends (6, 7) and which has a greater cross section at its ends (6, 7) than in a region (8) provided between the ends (6, 7).

3. Method according to any one of the preceding claims, **characterized in that** the transition region (12) of the V-shape (9) of the connecting web (3) is created with a cross section which is smaller in size compared with the cross section of the legs (10, 11) of the V-shape (9) and/or that the internal angle (α) formed by the legs (10, 11) of the V-shape (9) of the connecting web (3) is 5° to 45°, in particular 10° to 30°.

4. Method according to any one of the preceding claims, **characterized in that** the flexure bearing is created as a connecting web (3) with a V-shape (9), the transition region (12) whereof between the legs of the V-shape (10, 11) runs along a circular arc which preferably extends over a central angle of more than 180°.

5. Method according to any one of the preceding claims, **characterized in that** the two workpiece parts (1, 2) are separated from one another incompletely, leaving behind a single connecting web (3), **in that** two workpiece openings (4, 5; 27, 33) spaced apart from one another are created on the workpiece forming the connecting web (3), wherein one of the workpiece openings (4, 5; 27, 33) is created initially, wherein a separating line (16) is created immediately adjacent to the one of the workpiece openings (4, 5; 27, 33) which separating line produces contours of the two workpiece parts (1, 2) and wherein the other of the workpiece openings (4, 5; 27, 33) is subsequently created immediately adjacent to the separating line (16).

6. Method according to any one of Claims 1 to 4, **characterized in that** the two workpiece parts (1, 2) are incompletely separated from one another, leaving behind connecting webs (3) adjacent to one another at a distance, **in that** workpiece openings (4, 5; 27, 33) are created on the workpiece which workpiece openings are spaced apart from one another in pairs, forming a connecting web (3), wherein one of the workpiece openings (4, 5; 27, 33), which form a first of the connecting webs (3), is created initially, wherein a separating line (16) is created immediately adjacent to the one of the workpiece openings (4, 5; 27, 33) which separating line produces contours of the two workpiece parts (1, 2) and wherein one of the workpiece openings, which form a connecting web (3) adjacent to the first connecting web (3), (4, 5; 27, 33) is created immediately adjacent to the separating line (16).

7. Method according to any one of Claims 1 to 4, **characterized in that** the two workpiece parts (1, 2) are separated from one another incompletely, leaving behind a single connecting web, **in that** two workpiece openings (4, 5; 27, 33) spaced apart from one another and forming the connecting web (3) are created on the workpiece, wherein one of the workpiece openings (4, 5; 27 ,33) is partially created initially and in this case to the extent of a separating line (16) partially producing a contour of the workpiece opening (4, 5; 27, 33) and of the connecting web (3) in each case, wherein immediately adjacent to the separating line (16) partially producing the contour of the workpiece opening (4, 5; 27, 33) and of the connecting web (3) in each case, a separating line (16) is created which produces contours of the two workpiece parts (1, 2), wherein directly adjacent to the separating line (16) producing the contours of the two workpiece parts (1, 2), the other of the workpiece openings (4, 5; 27, 33) is partially created, to the extent of a separating line (16) partially producing a contour of the other workpiece opening (4, 5; 27, 33) and completing the contour of the connecting web (3) and wherein, finally, the initially partially created workpiece openings (4, 5; 27, 33) are completed.

8. Method according to any one of Claims 1 to 4, **characterized in that** the two workpiece parts (1, 2) are separated from one another incompletely, leaving behind connecting webs (3) adjacent to one another at a distance, **in that** workpiece openings (4, 5; 27, 33) are created on the workpiece which workpiece openings are spaced apart from one another in pairs, forming a connecting web (3), wherein one of the workpiece openings (4, 5; 27, 33) which form a first of the connecting webs (3) is partially created initially and in this case to the extent of a separating line (16) partially producing a contour of the workpiece opening (4, 5; 27, 33) and of the connecting web (3) in each case, wherein immediately adjacent to the separating line (16) partially producing the contour of the workpiece opening (4, 5; 27, 33) and of the connecting web (3) in each case, a separating line (16) is created which produces contours of the two workpiece parts (1, 2), wherein directly adjacent to the separating line (16) producing contours of the two workpiece parts (1, 2), one of the workpiece openings (4, 5; 27, 33), which form a second connecting web (3) adjacent to the first connecting web (3), is partially created, and in this case to the extent of a separating line (16) partially producing a contour of the workpiece opening (4, 5; 27, 33) and of the second connecting web (3) in each case, wherein the other of the workpiece openings (4, 5; 27, 33) which form the second connecting web (3) is then produced, to the extent of a separating line (16) partially producing a contour of the other workpiece opening (4, 5; 27, 33) and completing the contour of the second connecting web (3), wherein a separating line is created directly adjacent to the separating line (16) partially producing the contour of the other workpiece opening (4, 5; 27, 33) and completing the contour of the second connecting web (3), which separating line produces contours of the two workpiece parts (1, 2), wherein finally a separating line (16) is created directly adjacent to a separating line (16) producing contours of the two workpiece parts (1, 2) which partially produces a contour of the second workpiece opening (4, 5; 27, 33) delimiting the first connecting web (3) and completes the contour of the first connecting web (3) and wherein, finally, the initially partially created workpiece openings (4, 5; 27, 33) are completed.

9. Method according to any one of the preceding claims, **characterized in that** the two workpiece parts (1, 2) are completely separated from one another, **in that** a cross-section reduction (46, 47) of the connecting web (3) is initially produced on the at least one connecting web (3), preferably on at least one end (6, 7) of the connecting web (3), before the connection of the workpiece parts (1, 2) produced by the connecting web (3) is removed by separation at the cross-section reduction (46, 47).

10. Method for machining plate-like workpieces made of an elastically deformable material, in particular for the machining of sheet metal,
• wherein the workpiece is machined in a separating manner, in that two workpiece parts (1, 2) are initially separated from one another incompletely, leaving behind at least one connecting web (3) connecting the two workpiece parts (1, 2) to one another and then completely by removing the connection created by the connecting web (3) and
• wherein following the incomplete separation and prior to the complete separation of the two workpiece parts (1, 2), at least one of the workpiece parts (1, 2) is additionally machined,
**characterized in that**
the workpiece is machined in a separating manner using the method according to any one of the preceding claims.

11. Method according to Claim 10, **characterized in that** following the incomplete and prior to the complete separation of the two workpiece parts (1, 2), at least one of the workpiece parts (1, 2) is additionally machined on a workpiece edge (42).

## Revendications

1. Procédé dévolu à l'usinage séparatif de pièces du type plaque, constituées d'un matériau élastiquement déformable, notamment à l'usinage séparatif de tôles, deux parties (1, 2) de pièce étant séparées l'une de l'autre
• en ce sens que les deux parties (1, 2) de la pièce sont tout d'abord séparées l'une de l'autre de manière incomplète, en laissant subsister au moins une membrure de jonction (3) reliant l'une à l'autre lesdites deux parties (1, 2) de la pièce, et
• en ce sens que les deux parties (1, 2) de la pièce sont puis séparées l'une de l'autre de manière complète, par dissociation de la liaison instaurée par ladite membrure de jonction (3),
sachant que la au moins une membrure de jonction (3) est produite sous la forme d'une articulation à corps solide dotée d'une configuration par laquelle ladite membrure de jonction (3) relie l'une à l'autre les deux parties (1, 2) de la pièce de façon telle que lesdites deux parties (1, 2) de la pièce puissent se mouvoir l'une par rapport à l'autre, en opposition à une force de rappel, moyennant une déformation élastique de ladite membrure de jonction (3),
**caractérisé par le fait**
**que** l'articulation à corps solide est produite sous forme d'une membrure de jonction (3) pourvue d'une configuration sinueuse incluant
• une configuration en V (9) comprenant deux branches (10, 11) et une zone de transition (12) reliant l'une à l'autre lesdites branches (10, 11), lesquelles branches (10, 11) décrivent un angle interne aigu (α) et convergent en direction de ladite zone de transition (12), chacune desdites branches (10, 11) étant rattachée à l'une des parties (1, 2) de la pièce par l'intermédiaire d'une extrémité de ladite branche qui est éloignée de ladite zone de transition (12), ainsi qu'
• une branche additionnelle (13),
laquelle branche additionnelle (13) est reliée, par l'intermédiaire d'une zone additionnelle de transition (14), à une branche (11) de ladite configuration en V (9) qui lui est adjacente, la branche additionnelle (13), et la branche (11) de la configuration en V (9) qui lui est adjacente, formant une configuration additionnelle en V (15) de la membrure de jonction (3) en ce sens que ladite branche additionnelle (13), et ladite branche (11) de la configuration en V (9) qui lui est adjacente, sont prévues en tant que branches de ladite configuration additionnelle en V (15) et, en tant que telles, décrivent un angle interne aigu (a) additionnel et convergent en direction de ladite zone additionnelle de transition (14).

2. Procédé selon la revendication 1, **caractérisé par le fait que** l'articulation à corps solide est produite sous forme d'une membrure de jonction (3) qui fusionne dans l'une des deux parties (1, 2) de la pièce à chacune de ses extrémités (6, 7) et est présente, à ses extrémités (6, 7), une plus grande section transversale que dans une région (8) prévue entre lesdites extrémités (6, 7).

3. Procédé selon l'une des revendications précédentes, **caractérisé par le fait que** la zone de transition (12) de la configuration en V (9) de la membrure de jonction (3) est produite avec une section transversale de dimensionnement réduit, par rapport à la section transversale des branches (10, 11) de ladite configuration en V (9) ; et/ou **par le fait que** l'angle interne (α), décrit par lesdites branches (10, 11) de la configuration en V (9) de ladite membrure de jonction (3), mesure de 5 degrés à 45 degrés, en particulier de 10 degrés à 30 degrés.

4. Procédé selon l'une des revendications précédentes, **caractérisé par le fait que** l'articulation à corps solide est produite sous forme d'une membrure de jonction (3) pourvue d'une configuration en V (9) dont la zone de transition (12), entre les branches (10, 11) de ladite configuration en V (9), s'étend le long d'un arc de cercle couvrant, de préférence, un angle au centre de plus de 180 degrés.

5. Procédé selon l'une des revendications précédentes, **caractérisé par le fait que** les deux parties (1, 2) de la pièce sont séparées l'une de l'autre de manière incomplète, en laissant subsister une unique membrure de jonction (3), en pratiquant, dans ladite pièce, deux ouvertures (4, 5 ; 27, 33) qui sont distantes l'une de l'autre en formant ladite membrure de jonction (3), sachant qu'une desdites ouvertures (4, 5 ; 27, 33) de la pièce est pratiquée dans un premier temps, sachant qu'un joint de séparation (16) engendrant des profils des deux parties (1, 2) de la pièce est ménagé se raccordant directement à l'une desdites ouvertures (4, 5 ; 27, 33) de ladite pièce, et sachant que l'autre desdites ouvertures (4, 5 ; 27, 33) de ladite pièce est ménagée se raccordant directement audit joint de séparation (16).

6. Procédé selon l'une des revendications 1 à 4, **caractérisé par le fait que** les deux parties (1, 2) de la pièce sont séparées l'une de l'autre de manière incomplète, en laissant subsister des membrures de jonction (3) mutuellement voisines à distance, en pratiquant, dans ladite pièce, des ouvertures (4, 5 ; 27, 33) mutuellement distantes par paires en formant une membrure de jonction (3), sachant qu'une des ouvertures (4, 5 ; 27, 33) de la pièce, formant une première des membrures de jonction (3), est pratiquée dans un premier temps, sachant qu'un joint de séparation (16) engendrant des profils des deux parties (1, 2) de la pièce est ménagé se raccordant directement à l'une desdites ouvertures (4, 5 ; 27, 33) de ladite pièce, et sachant qu'une des ouvertures (4, 5 ; 27, 33) de ladite pièce, formant une membrure de jonction (3) voisine de ladite première membrure de jonction (3), est pratiquée se raccordant directement audit joint de séparation (16).

7. Procédé selon l'une des revendications 1 à 4, **caractérisé par le fait que** les deux parties (1, 2) de la pièce sont séparées l'une de l'autre de manière incomplète, en laissant subsister une unique membrure de jonction (3), en pratiquant, dans ladite pièce, deux ouvertures (4, 5 ; 27, 33) qui sont distantes l'une de l'autre en formant ladite membrure de jonction (3), sachant qu'une desdites ouvertures (4, 5 ; 27, 33) de la pièce est tout d'abord pratiquée, en partie et sous forme d'un joint de séparation (16) qui engendre à chaque fois, en partie, un profil de ladite ouverture (4, 5 ; 27, 33) de la pièce et de ladite membrure de jonction (3), sachant qu'un joint de séparation (16) engendrant des profils des deux parties (1, 2) de la pièce est ménagé se raccordant directement audit joint de séparation (16) engendrant à chaque fois, en partie, le profil de ladite ouverture (4, 5 ; 27, 33) de la pièce et de ladite membrure de jonction (3), sachant que l'autre desdites ouvertures (4, 5 ; 27, 33) de la pièce est pratiquée en partie se raccordant directement audit joint de séparation (16) engendrant les profils des deux parties (1, 2) de ladite pièce et sous forme d'un joint de séparation (16) qui engendre, en partie, un profil de l'autre ouverture (4, 5 ; 27, 33) de ladite pièce et qui vient compléter le profil de ladite membrure de jonction (3), et sachant que, pour finir, les ouvertures (4, 5 ; 27, 33) de ladite pièce, pratiquées en partie dans un premier temps, sont complétées.

8. Procédé selon l'une des revendications 1 à 4, **caractérisé par le fait que** les deux parties (1, 2) de la pièce sont séparées l'une de l'autre de manière incomplète, en laissant subsister des membrures de jonction (3) mutuellement voisines à distance, en pratiquant, dans ladite pièce, des ouvertures (4, 5 ; 27, 33) mutuellement distantes par paires en formant une membrure de jonction (3), sachant qu'une desdites ouvertures (4, 5 ; 27, 33) de la pièce, formant une première des membrures de jonction (3), est tout d'abord pratiquée en partie et sous forme d'un joint de séparation (16) qui engendre à chaque fois, en partie, un profil de ladite ouverture (4, 5 ; 27, 33) de la pièce et de ladite première membrure de jonction (3), sachant qu'un joint de séparation engendrant des profils des deux parties (1, 2) de la pièce est ménagé se raccordant directement audit joint de séparation (16) engendrant à chaque fois, en partie, le profil de ladite ouverture (4, 5 ; 27, 33) de la pièce et de ladite première membrure de jonction (3), sachant que l'une des ouvertures (4, 5 ; 27, 33) de la pièce, formant une seconde membrure de jonction (3) voisine de la première membrure de jonction (3), est pratiquée en partie se raccordant directement audit joint de séparation (16) engendrant les profils des deux parties (1, 2) de ladite pièce, sous forme d'un joint de séparation (16) qui engendre à chaque fois, en partie, un profil de ladite ouverture (4, 5 ; 27, 33) de ladite pièce et de ladite seconde membrure de jonction (3), sachant que l'autre desdites ouvertures (4, 5 ; 27, 33) de la pièce, formant ladite seconde membrure de jonction (3), est puis pratiquée sous forme d'un joint de séparation (16) qui engendre, en partie, un profil de l'autre ouverture (4, 5 ; 27, 33) de ladite pièce et qui vient compléter le profil de ladite seconde membrure de jonction (3), sachant qu'un joint de séparation engendrant des profils des deux parties (1, 2) de la pièce est ménagé, se raccordant directement audit joint de séparation (16) engendrant en partie le profil de l'autre ouverture (4, 5 ; 27, 33) de ladite pièce, et venant compléter le profil de ladite seconde membrure de jonction (3), sachant qu'un joint de séparation (16), qui engendre en partie un profil de la seconde ouverture (4, 5; 27, 33) de la pièce délimitant ladite première membrure de jonction (3) et qui vient compléter le profil de ladite première membrure de jonction (3), est ménagé en dernier lieu se raccordant directement à un joint de séparation (16) engendrant des profils des deux parties (1, 2) de ladite pièce, et sachant que, pour finir, les ouvertures (4, 5 ; 27, 33) de ladite pièce, pratiquées en partie dans un premier temps, sont complétées.

9. Procédé selon l'une des revendications précédentes, **caractérisé par le fait que** les deux parties (1, 2) de la pièce sont séparées l'une de l'autre de manière complète en engendrant, dans un premier temps, une diminution de section transversale (46, 47) sur la membrure de jonction (3) à présence minimale, de préférence à au moins une extrémité (6, 7) de ladite membrure de jonction (3), préalablement à la dissociation de la liaison desdites parties (1, 2) de la pièce instaurée, par ladite membrure de jonction (3), par séparation au niveau de ladite diminution de section transversale (46, 47).

10. Procédé dévolu à l'usinage de pièces du type plaque, constituées d'un matériau élastiquement déformable, notamment à l'usinage de tôles,
• sachant que la pièce est soumise à un usinage séparatif en ce sens que deux parties (1, 2) de ladite pièce sont, dans un premier temps, séparées l'une de l'autre de manière incomplète en laissant subsister au moins une membrure de jonction (3), reliant l'une à l'autre lesdites deux parties (1, 2) de la pièce, et sont, puis, séparées l'une de l'autre de manière complète par dissociation de la liaison instaurée par ladite membrure de jonction (3), et
• sachant qu'au moins l'une des parties (1, 2) de la pièce est soumise à un usinage additionnel après la séparation incomplète et préalablement à la séparation complète des deux parties (1, 2) de ladite pièce,
**caractérisé par le fait que**
la pièce est soumise à un usinage séparatif suivant le procédé conforme à l'une des revendications précédentes.

11. Procédé selon la revendication 10, **caractérisé par le fait qu'**au moins l'une des parties (1, 2) de la pièce est soumise à un usinage additionnel, sur une arête (42) de ladite pièce, après la séparation incomplète et préalablement à la séparation complète des deux parties (1, 2) de ladite pièce.
